# EUROPEAN PATENT SPECIFICATION

(11) **EP 0 978 266 B1**
(45) Date of publication and mention of the grant of the patent: **23.02.2005**
(21) Application number: 99114224.1
(22) Date of filing: 26.07.1999
(51) Int. Cl.: A61G 5/12, A61G 13/12, A61G 7/057

(54) **Physical position-retaining device for individuals**
Vorrichtung zum Halten der physikalischen Position von Personen
Dispositif pour maintenir la position physique de personnes

(30) Priority: 03.08.1998 JP 23122298
(43) Date of publication of application: 09.02.2000
(73) Proprietor: Alcare Co., Ltd., Sumida-ku, Tokyo (JP)
(72) Inventor: Hirano, Hiroyuki, Funabashi-shi, Chiba-ken (JP); Takekawa, Naomitsu, Itabashi-ku, Tokyo (JP)
(74) Representative: Klingseisen, Franz, Dipl.-Ing.

(56) References cited:
- GB-A- 2 310 394

## Description

### BACKGROUND OF THE INVENTION

### (1) Field of the Invention

The present invention relates to a position-retaining material and device for persons for whom it is required to retain or hold the position or attitude of human body, and more particularly, to an individual-purpose position-retaining material, by which necessary position can be retained depending upon the figure or configuration of individual patient and body pressure can be distributed efficiently.

### (2) Background Information

It is now required to fix or support the position of human body for fixing the position during the operation in the field of orthopedic surgery or general surgery, fixing at the time of post operation in the field of orthopedic surgery, and holding or supporting the sitting position in the welfare field.

In the field of orthopedic surgery or general surgery, when the operation is conducted over a long time, while retaining the constant position of the patient during the operation, fixtures for surgery such as sand bags, closed-cell foam blocks of various shapes and sizes, or restrain belts, vacuum fixer, and the like are used.

Among them, the vacuum fixer is the one in which sphere-like bodies such as relatively small plastic beads having a diameter of from 1 to 5 mm are packed in a hermetically sealed bag. Air is filled in the hermetically sealed bag, and the bag is laid on a bed or an operating table. A patient is placed thereon, and the sphere--like bodies are transferred in the bag and the patient take a required position. Then, by evacuating the air from the hermetically sealed bag with a vacuum pump to make the inside in a vacuum state, the sphere-like bodies are prevented from moving and a constant position can be retained.

However, for the fixtures using the sand bags, foam blocks, restrain belts or the like, it is required to combine a few members different in the shape and size. Further, there are such drawbacks that ones having various shapes and sizes are necessarily prepared in order to deal with any case at any time. Further, skills are required to apply the fixtures to patients, and when fixing or holding is made over a long time, fixing or holding is loosened and the position is likely to be changed.

Although accurate fixing or holding can be made relatively easily by the latter fixture i.e. vacuum fixer, vacuum pump is necessarily used, and when the body is removed from it, the fixture looses the shape, and the shape must be formed again, such being inconvenient. Further, when used in an operating room, since medical instruments having a sharp point such as syringes or surgical knives, are used, it may sometimes happen to damage the bags for which hermetical sealing is required, and expensive fixtures may be destroyed, whereby such bags are not popularly used.

In addition, both have no elasticity and lack air-permeability such being uncomfortable for tients.

Furthermore, particularly in the field of orthopedic surgery, for example, in the surgery of lumber vertebra, cervical vertebra, hip joint, etc., for the ones for which rest for a relatively long time is needed after the surgery, the patients are required to hold a constant posture over a long time. For such a purpose, the position is retained by use of the sand bag, foam block or vacuum fixer. However, since these are poor in the cushioning properties and follow-up properties, bedsore is caused by holding over a long time, and since these have no air-permeability, sweat retention is caused and skin trouble may often be caused.

Further, for the patients who can not change the position by themselves, for example, patients who are handicapped persons and cannot support their trunks by themselves, bedridden patients (particularly, aged persons) or the like, various types of depressurization mats for preventing bedsore using air, water, gels, fams or the like, have been used. Although these can distribute the body pressure, these are poor in the position-supporting pro perties and unstable. Accordingly, there are drawbacks that these are not comfortable for patients and the nursing is increased for the persons who look after the patients.

Particularly, these depressurization mats are in the antinomy relationship that if the body pressure dispersibility is improved, the fixing stability will be reduced, and if it is attempted to secure the fixing stability, the body pressure dispersibility will be reduced, whereby the body pressure dispersibility and the fixing stability cannot be satisfied at the same time.

Moreover, in order to retain the sitting position of seriously handicapped persons, a mold is used. For the preparation of this mold, for example, the shape of the affected part is taken by using a plaster to make a female mold (negative model), a male mold (positive model) is prepared from the female mold, and then a fixture is obtained from this male mold by use of a two component type urethane resin material having cushioning properties. As another method, a fixture mold is prepared by using a material which is rigid and has a high supporting property, and putting a cushion material thereon.

Although these fixtures are effective to support the position, these have no air-permeability, and cannot be used for handicapped persons who lack sufficient physical strength and suffer from neuropathy. Further, for the fixtures for retaining the sitting position, it is required to prepare a negative model and a positive model, which involves additional time, labor and cost.

Furthermore, GB-A-2 310 394 discloses a stretchable bag containing a physical position-retaining material the preamble of claim 1 is being based upon. Especially, that known physical position-retaining material comprises a predetermined amount of granules and a predetermined amount of water-curable resin sufficient for bonding the granules after curing of the water-curable resin. This material forms a mass before curing of the water-curable resin so that, when pressure is applied to the mass with water by a human body, the granules move one another to shape the mass into a configuration corresponding to the shape of the human body, thereby to form the shaped mass in the cured state. With such a physical position-retaining material it became possible to easily obtain a fixture corresponding to the desired shape of the human body without the need of preparing negative and positive models.

### SUMMARY OF THE INVENTION

It is an object of the present invention to improve the above-mentioned stretchable bag containing a physical position-retaining material according to the state of the art to be easier to be used.

This is achieved by a stretchable bag as defined in claim 1.

Water is added to the individual-purpose position-retaining material, and this is put on the necessary position, i.e. the region to be applied taking due care so that the material would not attach directly to the skin, in order to make a mold of the region.

Then, the water-curable resin is gradually cured and interconnects the granules, to obtain a formed body fitting on the position.

The water-curable resin has an appropriate elasticity even after curing, and, in cooperation with the granules having an elasticity, can securely fix or retain the position and can effectively distribute the body pressure so as to prevent the formation of bedsore.

### BRIEF DESCRIPTION OF THE DRAWINGS

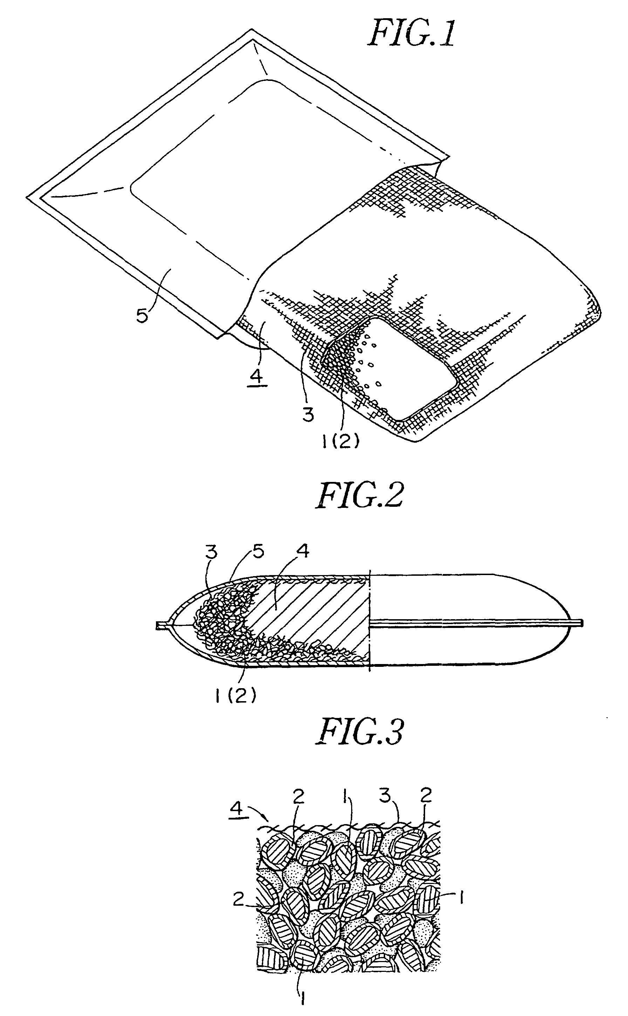

Fig. 1 is a partially cutaway perspective view showing an example of the present invention.
Fig. 2 is a partially cutaway front view of Fig. 1.
Fig. 3 is an enlarged partial cross-sectional view of Fig. 2.
Fig. 4 is an explanatory view showing the state of use of the individual-purpose position-retaining material as shown in Fig. 1.
Fig. 5 is an explanatory view showing the individual-purpose position-retaining material for retaining the state, lateral position on an operating table.
Fig. 6 is an explanatory view showing the individual-purpose position-retaining material for retaining the state, abdominal position.

### DETAILED DESCRIPTION OF PREFERRED EMBODIMENTS

The granules should preferably be the ones which have an appropriate elasticity and are inactive or processed to be inactive to an uncured water-curable resin. The granules are formed by, for example, olefin type granules such as polyethylene or polypropylene having an elasticity imparted by a softener or a plasticizer, or copolymers thereof; vinyl acetate copolymers, polyvinyl chloride, polystyrene, polyester, polyethylene, polyurethane, neoprene, polybutadiene, silicone and other rubber materials which have an elasticity likewise imparted or have an elasticity inherently. Further, an elastic body and a gelled body which are inactive to the water-curable resin, may be used.

Such granules may include, for example, COSMOGEL (trade name, manufactured by COSMO INSTRUMENTS CO., LTD.), MNCS (trade name, manufactured by BRIDGESTONE CORPORATION), ALPHAGEL (trade name, manufactured by SIGEL CO., LTD.), PEF (trade name, manufactured by TORAY INDUSTRIES, INC.), MITSUFUKU FORM (trade name, manufactured by MITSUFUKU INDUSTRY CO., LTD.), EXE SEAL (trade name, manufactured by INOAC CORPORATION), Kalsoft (trade name, manufactured by TAKIRON CO., LTD.), Neoprene Rubber (manufactured by YAMAMMOTO CHEMICAL IND. CO., LTD.), CR Latex (manufactured by DAIWABO CO., LTD. and MARUSHIN CHEMICAL INDUSTRIES CO., LTD.), SILICONE SPONGE (manufactured by CHIYODA RUBBER CO., LTD., INOAC CORPORATION, and SHIN-ETSU CHEMICAL CO., LTD.), and the like.

The granules may be formed into a shape such as sphere, rod, cubic, rectangular parallelopiped, columnar, disk or the like, preferably a shape having corners chipped off or rounded. Further, the granules may be formed into a solid or hollow body, or may be a foam.

In the case of a foam, it should preferably be a closed-cell foam so that the water-curable resin as described below would not permeate into the granules. Particularly, it is often preferred to be one having a skin layer on the surface.

The size of the granules should preferably be at most about 8 cm³ , depending upon the region to which the individual-purpose position-retaining material is applied, the material used for the granules, and the type of the water-curable resin. Particularly preferred is at most 0.125 cm³ , by which an easy-to-use position retainer having a further smooth surface can be obtained. The one having a size of larger than about 8 cm³ can ensure a high air permeability, but may sometimes inferior in the mold-making property and the surface smoothness. It may sometimes be preferred to use two or more types of the granules different in the material, shape, properties, size, etc.

The hardness of the material constituting the granules, is preferably at most about 2 kg/cm² , more preferably at most about 1.0 kg/cm² as a 25% compressive strength in accordance with a hardness test of a soft urethane foam for cushion (JIS: Japan Industrial Standard, K6401 5.4).

Further, the compressive residual strain at that time (JIS K6401 5.5) is preferably at most about 15%, more preferably at most about 13%.

If the compressive strength is higher than about 2 kg/cm² and the compressive residual strain is higher than 15%, the granules tend to be excessively hard and generate strain during the use, whereby the comfortability in use is worsened.

The water-curable resin is admixed with the granules, and this mixture is placed in a mass or a lump. If a water-curable urethane prepolymer is used as the water-curable resin, it is easy to cure the resin by the addition of water, such being easy in use and convenient. However, other curable resin, for example, moisture-curable silicone resin or the like may be used.

As the water-curable resin, ones having an appropriate elasticity even after curing, are preferred.

The granules may be ones capable of forming a bonded state with the water-curable resin when the water-curable resin is reacted and cured by the addition of water as described below. Further, the granules may be ones in a wrapped state so that the granules are surrounded by the water-curable resin without forming a bonded state with the water-curable resin.

The elasticity of the water-curable resin after curing is measured by the following method.

### MEASUREMENT METHOD

A water-curable resin is coated on a release paper to a thickness of 100 µ by use of filmcoating machine FILMCOATER P1-1210 (manufactured by TESTER SANGYO CO., LTD.), and left to stand at room temperature for 24 hours for curing. After curing, the sheet is cut into a piece with a size of 25 x 200 mm to prepare test piece. Using the test pieces, by use of Autograph 500D tester (manufactured by Shimazu Corporation), tensile strength when elongated by 25% is measured under the conditions that the speed of testing rate of stressing is 10 mm/min. and testing length of test piece is 100 mm, and the measured value is converted in terms of cm² .

With the water-curable resin after curing, the tensile strength by the above measurement method is preferably at most about 15 kg/cm² , more preferably at most about 5 kg/cm ² (at the time of 25% elongation). If it is higher than about 15 kg/cm² , the elasticity is low and it is often hard to conduct the distribution of the body pressure efficiently.

The water-curable urethane prepolymer is a prepolymer having isocyanate groups at terminal ends, obtainable by the reaction of a polyol and polyisocyanate.

As the polyol, a low molecular weight polyol such as polyethylene glycol, polypropylene glycol and polyglycerol, a polyether polyol obtainable by adding alkylene oxide such as ethylene oxide or propylene oxide to a polyphenol, a polyester polyol obtainable by dehydration condensation of a low molecular weight polyol and a dicarboxylic acid such as adipic acid or phthalic acid, a polytetramethylene glycol obtainable by ring opening polymerization of a lactone such as γ-butyrolactone or ε-caprolactone, a polydiene polyol which is a polymer of a diene compound such as butadiene or isoprene and has hydroxyl groups at terminal ends, and mixtures thereof, may be used.

The average molecular weight of the polyol is preferably from about 600 to 4,000, more preferably from about 1,000 to 2,000. It is desirable to use the ones having such molecular weight singly or in combination. It is often preferred to use polyethylene glycol or polypropylene glycol as the polyol.

If the molecular weight is too small, the elasticity tends to be poor, and if it is too large, rich in the elasticity. However, the increase of the viscosity makes it difficult to mix with the granules. The viscosity is preferably from about 10 to 2,000 ps, more preferably from about 500 to 1,000 ps at 20 ° C.

As the polyisocyanate, known organic polyisocyanates may be used. For example, diphenylmethane diisocyanate, toluene diisocyanate, 1,5-naphthalene diisocyanate, tolidine diisocyanate, hexamethylene diisocyanate, isophorone diisocyanate, p-phenylene diisocyanate, transcyclohexane 1,4-diisocyanate, xylene diisocyanate, hydrogenated xylene diisocyanate, hydrogenated diphenylmethane diisocyanate, lidine diisocyanate, triphenylmethane triisocyanate, tris(isocyanatephenyl)thiophosphate, tetramethylxylene diisocyanate, lidine ester triisocyanate, 1,6,11-undecane triisocyanate, 1,8-di socyanate-4-isocyanate methyloctane, 1,3,6-hexanemethylene triisocyanate, bicycloheptane triisocyanate, trimethylhexame thylene diisocyanate, polymethylenepolyphenylene polyisocyanate and 3-isocyanatemethyl 3,5,5-trimethylcyclohexyl isocyanate, and carbodiimide-modified or isocyanurate-modified polyisocyanates thereof, may be mentioned.

These polyisocyanates may be used alone or as a mixture of appropriate combination thereof. Among the above-mentioned compounds, aromatic polyisocyanates such as diphenylmethane diisocyanate, p-phenylene diisocyanate and polymethylenepolyphenylene polyisocyanate, and carbodiimide-modified polyisocyanates thereof, may often be used easily.

As the proportion of the polyol and the polyisocyanate, polyisocyanate is usually from about 1.2 to 10 equivalents, preferably from about 1.5 to 5 equivalents, based on 1 equivalent of the polyol.

To the water-curable resin, a catalyst, a stabilizer, a defoaming agent, an antioxidant, a colorant, a thixotropy imparting agent, a filler or the like may suitably be used, taking into consideration the curing time, the storage stability, the acceleration of degassing during curing, the color tone on finish, or the like. As such additives, known compounds may suitably be used depending upon the components of the water-curable resin.

As the catalyst, in case of the water-curable urethane prepolymer, for example, bis(2,6-dimethylmorpholino)diethylether, triethylenediamine, cyclohexylamine, dimethylethanolamine, a substituted morpholine, dimethylpiperazine, dimethylaminoethyl-3-dimethylaminopropylether, dimorpholinoethane, tetraethylethyleneamine, imidazole, triethanolamine, 1,3-bis(dimethylamino)2-propanol, dimethylaminoethoxyethanol, dimorpholinodiethylether, dimethyl-aminodiethylether, bis(morpholinoethyl)ether, 4-[2-[1-methyl-2-(4-morpholinyl)ethoxy]ethyl]morpholine, and the like may be mentioned.

These may be used alone or as a mixture thereof, and may preferably be used in an amount of from about 0.01 to 5 % (% by weight, hereinafter the same applies) to the urethane prepolymer.

As the stabilizer, organic acids, organic acid chlorides, acidic substances such as acidic phosphates, chelating agents (diketone compounds and hydroxycarboxylic acids) and the like may be mentioned, and adequate ones may be selected taking into consideration the combination with the catalyst. Usually, methanesulfonic acid as the organic acid may often suitably be used. Added amount thereof is usually from about 0.01 to 3 %.

As the defoaming agent, silicone type ones and wax type ones may be mentioned, but usually the silicone type defoaming agents may preferably be used in an amount of from about 0.01 to 2 %. As the antioxidant, hindered phenols, phosphorus type compounds, etc. may be mentioned. Preferred is tetrakis [methylene-3-(3-5-ditertiary-butyl-4-hydroxyphenyl)propionate] methane. As the colorant, it is preferred to use legal coloring matter (coloring matter admitted by the Japanese Pharmaceutical Affairs Law) which are less in the risk of skin trouble.

By using the thixotropy imparting agent, when water-curable resin and granules are retained in a mixed state, maldistribution of the water-curable resin can be prevented and the state wherein both are uniformly mixed can be retained.

In the case where the water-curable urethane prepolymer is used as the thixotropy imparting agent, silica, titanium oxide, polyalkylene modified compounds obtainable by treating terminal hydroxyl groups of an organic type polyalkylene glycol with a hydroxyl group treating agent, i.e. usually, ones obtainable by treating polyethylene glycol, polypropylene glycol or a copolymer thereof with methyl chloride, fatty acid or the like, aromatic carboxylates. benzilidene sorbitol synthesized by an acetalization reaction of D-sorbitol and an aromatic aldehyde, ditrilidene sorbitols and the like, may be used. Added amount thereof is usually from about 0.01 to 6%, preferably from about 0.05 to 3% based on the water-curable urethane prepolymer.

Physical properties of the water-curable resin depend on the subject to be applied. However, preferred is the one which shows a curing time of from about 3 to 30 minutes after it is brought into contact with water, and then provides an apparent hardness at such a level that a body weight can be loaded, and which is less in the change of volume by the reaction, less in the adverse affects such as pyrexia or stimulation to human bodies, and high in the storage stability.

With respect to the amount of the water-curable resin to be mixed to the granules, it has been found that it is preferred to define the amount of the resin per volume of the granules rather than the weight ratio. In usual, it is preferred to use at least about 7.5 g of the resin per liter of the granules. More preferred is to use it in an amount of from about 45 to 420 g.

The mixing of the granules and the water-curable resin may suitably be conducted under the conditions at 20° C and a relative humidity of at least 20%, with a mixing machine such as a utility mixer, a concrete mixer or the like. A mixing vessel is filled with a dried nitrogen gas, and a predetermined amount of granules is poured thereinto. While stirring them, a predetermined amount of a water-curable resin is added thereto, and mixed until they become uniform.

In the one having the granules and the water-curable resin mixed, the surface of the granules is covered with the water-curable resin in an amount adequate to interconnect the granules. The granules are stuck and bonded in a mass with the uncured water-curable resin. However, these are in such a state that respective granules can move one another.

Once the granules and the resin are in a mixed state, the mixture can be stored without undergoing the curing if contained in a packaging bag including aluminum foils or the like, or the one having no moisture-permeability such as a box or a can.

When this material is used, water is added to the mixture of granules and water-curable resin, and the whole body is well infiltrated in water, and then excess water is drained off. On an appropriate stand, a sheet having a good releasability treated with silicone, fluoride or the like; a knit, a woven fabric, an nonwoven fabric or the like. having a density at a level such that the granules will not pass through it, which may adhere to the water-curable resin and is formed by natural fibers, semi-synthetic fibers or synthetic fibers such as cotton, hemp, rayon, polyester, nylon, acryl, urethane or a styrene-isoprene-styrene copolymer; or the like is laid. Then, the above mixture is placed thereon, and the releasable sheet or adhesive knit, woven fabric, or nonwoven fabric is further placed thereon so that no water-curable resin would attach to the region to which it is to be applied.

The region to which it is to be applied such as head and neck, shoulder, waist, lower extremity, upper half of the body, lower half of the body or whole body, is placed thereon for fitting. The granules transfer along that region and fit on the body surface of the region, and the mixture is put along the body from the side portion. The water-curable resin is gradually cured and a position retainer fitting to the patient can be obtained.

The sheet, knit, woven fabric, nonwoven fabric and the like may preferably be the ones having an extensibility so that they fit on the unevenness of the body surface of the region to be applied.

The mixture of the granules and the water-curable resin is further usable if this is preliminarily encapsulated in a bag formed by knit, woven fabric, nonwoven fabric or the like which is inactive to the resin, and has a low moisture content, a water permeability and an air permeability.

By using such a bag, a predetermined amount of the mixture can be placed in a mass, and during the use, the operating surgeon, patient or the like, can be kept to be not in direct contact with the resin. Accordingly, the skin can be prevented from adverse affect by the resin, and the operation for forming the formed body can be made further easily.

This bag is formed by a material neither having a chemical strucure nor containing a substance which activates the reactive groups of the water-curable resin. The size, shape and structure of the bag are variously modified depending upon the region of application thereof. In the case of a large size one for a half body or a whole body, it may sometimes be convenient to partition the inside of the bag into a plurality of chambers.

As the material of the bag, synthetic fibers of e.g. polyester, polypropylene, polyethylene, polyacryl, polyurethane, a styrene-isoprene-styrene copolymer (SIS) and polyamide, regenerated fibers and natural fibers such as rayon, staple fibers, cotton and hemp, and inorganic fibers such as glass fibers, may be used. With the one having a reactivity to the water-curable resin or a high moisture content, it is preferred to make it inactive by preliminarily treating the surface or to remove the moisture by drying.

As the preferred material in the case of water-curable urethane prepolymer, polyester, polypropylene, polyethylene, polyurethane, SIS and the like, which are not reactive to the above-mentioned uncured urethane prepolymer, may be mentioned. Particularly preferred are polyester, polypropylene, polyethylene, polyurethane SIS and the like which have a heat seal property, and mixed-spun fibers thereof, may be mentioned.

The above material is used for the preparation of the knit, woven fabric, nonwoven fabric, net fabric or the like. The material should preferably be formed in the one capable of providing the flexibility and elasticity so that it would fit on the unevenness of the region of application in use.

With respect to the flexibility and elasticity, it is preferred to use the one showing an elongation of at least about 15% in any one of the vertical and horizontal directions. If it is less than this level, it may sometimes be difficult to make a model to take the body figure.

This bag is preferably the one having a low affinity with the water-curable resin as mentioned above. The adhesion between the bag and the mixture of the granules and the water-curable resin incorporated therein, is preferably at most about 0.5 kg/25 mm (in accordance with JIS Z0237,8). If it is higher than this level, during the storage for a long time, the water-curable resin may be soaked into the bag, such being troublesome in use.

Taking the easiness in practical use into consideration, the above value is preferably at most about 0.3 kg/25 mm, more preferably at most about 0.1 kg/25 mm.

The knit, woven fabric and the like forming the bag, may be formed by bundling a lot of thin fibers. In such a case, it is preferred to conduct a treatment to lower the affinity with the resin in order not to allow the water-curable resin to penetrate into the thin fibers. Such a treatment can be made by a treating agent of, for example, a fluorine type, a silicone type, a paraffin type, an alkylchlomic chloride type, an alkylethylene urea type and an alkylmethylpyridium chloride type. The treating agent is used in such an amount that the active ingredient would be attached in an amount of from about 0.1 to 6%. The treating agent may be attached by impregnating, coating, spraying or the like, before or after the preparation of the knit, woven fabric or the like.

As a preferred example of the above bag, using yarns of about 200 denier made of polypropylene or polyester alone or a blend thereof, bags are prepared from ones knitted in a cylindrical shape with a density of 22 lines/inch in a course direction and 22 line/inch in a wales direction and with a unit weight of about 230 g/m ² having a stretchability of from 5 to 60% in a vertical direction and from 50 to 300% in a horizontal direction, for example, "WHITE NET" (trade name, manufactured by ALCARE CO., LTD.).

By a treatment of attaching a treating agent of a fluorine type emulsion onto the surface of the bag so that active ingredient would be 0.7%, the storage stability will be further improved and the operation will be made easily.

The one obtained by packing the mixture of the granules and the water-curable resin into the bag, can be stably stored by encapsulating it in a moisture-impermeable packaging bag containing aluminum foils.

When this is used, if it is crumpled over the packaging bag containing aluminum foils if required, the granules and the water-curable resin can be made uniform as a whole. Then, this packing bag is torn and the bag filled with the mixture of the granules and the water-curable resin is taken out.

When the bag is dipped in water as it is, the water penetrates thereinto, and then the bag is taken out of water and lightly squeezed to remove excess water, and the bag is put on the region of application.

By doing so, the granules move in the bag corresponding to the unevenness of the region of application, and has a form so that it fits on the shape of the surface of the region, and at such state, the water-curable resin cures. Particularly in the case of urethane prepolymer, by the reaction with water, a resin network is formed and at the same time, carbon dioxide gas is generated. Since the carbon dioxide gas runs out of the resin, ventilating paths are formed in a net-like fashion in the resin due to the formation of carbon dioxide bubbles, and the formed body after curing the resin is very rich in air permeability.

Thus formed body cured by reacting the mixture of the granules the water-curable resin with water, has adequate hardness and elasticity, and is adjusted to show a value of at most about 1.5 kg/cm² in term of a 25% compressive hardness. Further, the compressive residual strain is adjusted to be a value of at most about 13%.

Preferably, the 25% compressive hardness is adjusted to be at most about 0.5 kg/cm² and the compressive residual strain is adjusted to be a value of at most about 10%.

The 25% compressive hardness and the compressive residual strain are measured by the following methods.

### 25% Compressive hardness:

One obtained by mixing the granules and the water-curable resin uniformly, is flown into a mold of 5 cm x 5 cm x 5 cm, and 10 ml of distilled water is added from the above and spread over the entire surface of the resin to cure the resin. After curing, the resin block is taken out of the mold to use it as a test piece.

In the measurement, using Autograph 500D tester (manufactured by Shimazu Corporation) in accordance with JIS K6401 5.4, the resin block is compressed by 75% at a rate of 10 mm/min. and the load is immediately removed, and then 25% compression is made at a rate of 10 mm/min., and the load at this time is read and converted in term of cm ² .

### Compressive residual strain:

A test piece is prepared in the same manner as in the test of the 25% compressive hardness.

The thickness of this test piece is measured accurately.

In this measurement, in accordance with JIS K6401 5.5, this test piece is fixed with aluminum compression plates having inner surfaces parallel to each other with 50% compression, and held in a constant temperature bath of 20° C for 4 hours. This test piece is taken out of the bath, and the load is removed, and 30 minutes later, the thickness is measured.

The ratio of the reduction in the thickness as compared with the original thickness, is referred to as a compressive residual strain.

When the position retainer in the formed body obtained by curing the resin as mentioned above, is put on an affected part at the region to be applied, it well fits on the shape of the affected part, and the position can be securely fixed and supported.

The position retainer wholly has an adequate elasticity and cushioning properties. Besides, without a so-called bottom-out phenomenon, the human body can be softly supported and the body pressure can be appropriately distributed. Accordingly, even under the operation over a long time or postoperative rest in bed, the position can be securely retained without being accompanied by pain. If this position retainer is used for patients who can not change the position by themselves, for example, bedridden patients, they can be kept in bed without forming bedsore.

### EXAMPLE 1

A water-curable urethane prepolymer was prepared by mixing the following blend materials.

| | |
|---|---|
| PPG 2000 | 780 g |
| MDI | 200 g |
| NIAX CATALYST A-1 | 15 g |
| IRGANOX 1010 | 1 g |
| byk-A525 | 1 g |
| Benzoyl chloride | 5 g |
| Note: | |
| PPG 2000: polypropylene glycol having a number average molecular weight of 2,000 | |
| MDI: 4,4'-diphenylmethane diisocyanate | |
| NIAX CATALYST A-1: a mixture of bis(2-dimethylaminoethyl)ether and dipropylene glycol (manufactured by WITCO CO., LTD.) IRGANOX 1010: a hindered phenol type age register byk-A525: a silicone type defoaming agent | |

The tensile strength (at the time of 25% elongation) of the water-curable urethane prepolymer after the curing, was 2 kg/cm² (measured in accordance with the above-mentioned method).

As the granules, granules of "COSMOGEL 04" of polyethylene with a columnar shape having a volume of 0.05 cm3 per a granule (manufactured by COSMO INSTRUMENTS CO., LTD.) were prepared. The material of the granules had a 25% compressive hardness of 0.18 kg/cm² and a compressive residual strain of 2.5%.

To the granules, 170 g of the water-curable polyurethane prepolymer was added per liter of the granules, and these were throughly mixed so that the resin would cover the entire surface of the granules.

One cured by adding water to the retaining material, had a 25% compressive hardness of 0.15 kg/cm ² and a compressive residual strain of 3.5%, and adequate elasticity and stiffness, and was rich in air permeability.

### EXAMPLES 2 TO 4

The following water-curable resins and granules were prepared to produce retaining materials of EXAMPLES 2 TO 4 and COMPARATIVE

### EXAMPLES 1 TO 2.

RESIN A:The water-curable urethane prepolymer of EXAMPLE 1.

RESIN B:Water-curable urethane prepolymer

| | |
|---|---|
| PPG 2000 | 660 g |
| MDI | 320 g |
| NIAX CATALYST A-1 | 15 g |
| IRGANOX 1010 | 1 g |
| byk-A525 | 1 g |
| Benzoyl chloride | 5 g |
| GELOL D | 0.065 g |
| Note: | |
| GELOL D: a thixotropy imparting agent (benzilidene sorbitol as an acetalization product of D-sorbitol and an aromatic aldehyde; manufactured by NEW JAPAN CHEMICAL CO., LTD.) | |

| | |
|---|---|
| PPG 2000 | 320 g |
| PPG 400 | 230 g |
| MDI | 420 g |
| NIAX CATALYST A-1 | 15 g |
| IRGANOX 1010 | 1 g |
| byk-A525 | 1 g |
| Benzoyl chloride | 5 g |
| Note: | |
| PPG 400: polypropylene glycol having a number average molecular weight of 400 | |
| GRANULES E: | |
| | Granules of "COSMOGEL 04" made of polyethylene with a columnar shape having a volume of 0.05 cm ³ per a granule ( manufactured by COSMO INSTRUMENTS CO., LTD. ) used in EXAMPLE 1. |
| GRANULES F: | |
| | Closed-cell foam chloroprene rubber sponge "C-4305" of a cubic shape with each edge being 3 mm (manufactured by INOAC CORPORATION) |
| GRANULES G: | |
| | Closed-cell polyethylene foam "MITSUFUKU FORM PF-07" of a cubic shape with each edge being 3 mm (manufactured by MITSUFUKU INDUSTRY CO., LTD.) |
| GRANULES H: | |
| | 50-times foamable closed-cell polystyrene foam "Eslen Beads Beads HCM" of a spherical shape with a diameter being 4 mm (apparent specific gravity: 0.02) (manufactured by SEKISUI PLASTICS CO., LTD.). |

Using RESINS A to C and GRANULES E to H, retaining materials of EXAMPLES 2 TO 4 and COMPARATIVE EXAMPLES 1 TO 2 were prepared with the same mixing proportion as EXAMPLE 1. Characteristic values of the resins and the granules and characteristic values of the retainers after the curing, will be indicated in the following table. Respective characteristic values in the table are as follows:
Characteristic value 1: tensile strength of the water-curable resin after the curing (at the time of 25% elongation) (measured in accordance with the above-mentioned method)
Characteristic value 2: 25% compressive hardness of the granules (in accordance with JIS K6401 5.4)
Characteristic value 3: compressive residual strain of the granules (in accordance with JIS K6401 5.5)
Characteristic value 4: 25% compressive hardness of the retainer (measured in accordance with the above-mentioned method)
Characteristic value 5: compressive residual strain of the retainer (measured in accordance with the above-mentioned method)

| | Ex. 2 | Ex. 3 | Ex. 4 | Comp. Ex. 1 | Comp. Ex. 2 |
|---|---|---|---|---|---|
| Resin | A | B | A | C | A |
| C-1 (kg/cm² ) | 2 | 13 | 2 | * | 2 |

| Granules | E | E | F | G | H |
|---|---|---|---|---|---|
| C-2 (kg/cm² ) | 0.18 | 0.18 | 0.8 | 3.0 | 1.6 |
| C-3 (%) | 2.5 | 2.5 | 2.6 | 2.0 | 21 |

| Retainer | | | | | |
|---|---|---|---|---|---|
| C-4 (kg/cm² ) | 0.14 | 0.45 | 0.65 | 2.9 | 1.25 |
| C-5 (%) | 2.5 | 3.8 | 4.2 | 12.0 | 18.0 |

| | | | | | |
|---|---|---|---|---|---|
| Note: * indicates that the resin was broken before it was stretched by 25%, and the measurement was impossible. C-1 to C-5 means Characteristic value-1 to -5, respectively. | | | | | |

### Consideration:

The retainers obtained after the curing in EXAMPLES 1 to 4 were appropriate in the 25% compressive hardness and the compressive residual strain, had adequate stiffness and elasticity, and were applicable for use. On the contrary, in COMPARATIVE EXAMPLE 1, the 25% compressive hardness was high and unpleasant touch was given, and in COMPARATIVE EXAMPLE 2, the compressive residual strain was large, both being not applicable for use.

### EXAMPLE 5

Granules 1 and a water-curable polyurethane prepolymer 2 indicated in EXAMPLE 1 were mixed at the above proportion. This mixture was encapsulated in a bag 3 with a size of 50 cm (horizontal) x 60 cm (vertical), made of a knit formed by polypropylene fibers having a stretchability of 15% in a horizontal direction. A retaining material 4 was contained in an aluminum laminate bag 5 and hermetically sealed.

Before the use, the whole body was crumpled well over the aluminium laminate bag 5 to uniformly mix the granules 1 and the water-curable polyurethane prepolymer 2. Then, the aluminum laminate bag 5 was opened and the retaining material 4 was taken out, the retaining material was dipped in water together with the knit bag 3 of polypropylene fibers and taken out, and then lightly squeezed to remove excessive water.

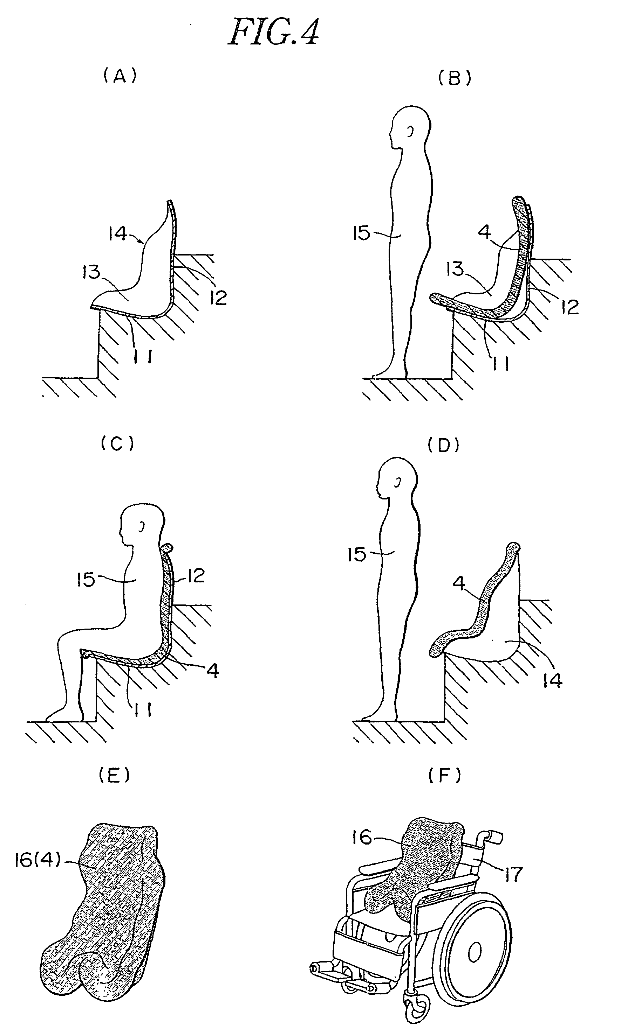

A chair 14 having a seating portion 11, a chair back portion 12 and an arm rest portion 13 integrally formed with a plastic material, was prepared (Fig. 4-A). The above retaining material 4 was put on the inner surface of the chair 14 so that the material would cover the inner surface (Fig. 4-B). A patient 15 was made to sit on the retaining material 4, and the retaining material 4 was manipulated by hands so that it would fit on the body surface at a region to be a lied (Fig. 4-C). The prepolymer 2 in the retaining material 4 gradually cured so that it would interconnect the granules 1, and 5 minutes later, in a state that no more deformation is caused, the patient rose from the chair (Fig. 4-D). When the retaining material 4 was removed from the chair 14 and the curing of the prepolymer was further developed, ventilating paths were formed by the generated carbon dioxide gas, resulting in the completion of a position retainer 16 (Fig.4-E). The retainer 16 thus formed had adequate hardness and elasticity, and was excellent in the air permeability. When this retainer 16 was installed on a wheelchair 17 or the like, even sitting positions of seriously physically handicapped persons could be retained, free of partial unpleasant touch, with excellent comfortability in use, whereby the handicapped persons could move further easily (Fig. 4-F).

Further, since the time for making the mold is short as described above, the time for which the handicapped persons are not allowed to move is very short and they have less pain or unpleaslant feeling, and the preparation of the retainer is extremely easy without any special devices.

### EXAMPLE 6

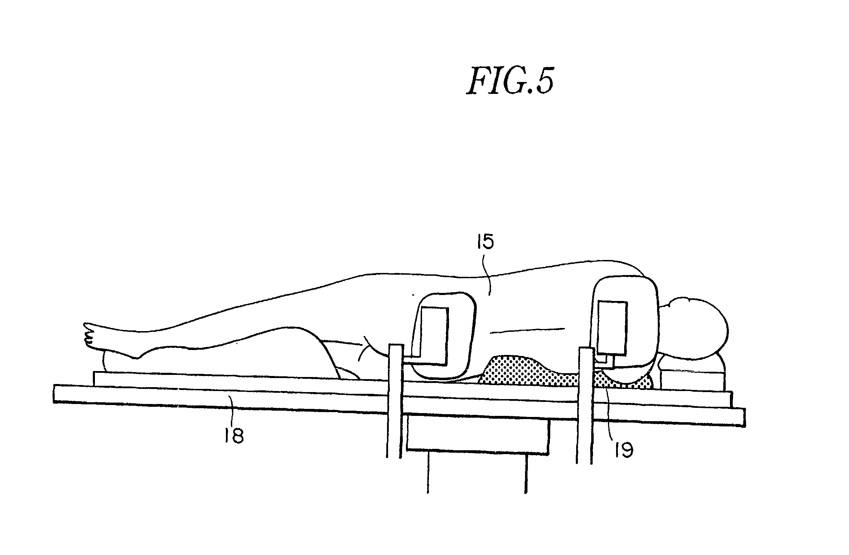

In accordance with EXAMPLE 5, an individual-purpose retainer 19 was prepared which is used for supporting upwardly a patient 15 laying in lateral position on an operation table 18 as shown in Fig. 5. This can be effectively used for operation.

### EXAMPLE 7

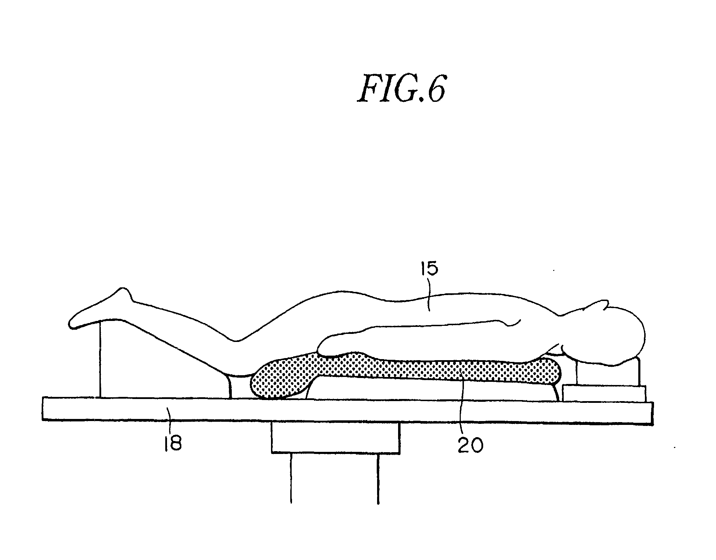

In accordance with EXAMPLE 5, a retainer 20 was prepared which is used for supporting a wide range from the breast to the lower extremity in order to retain a patient 15 laying in abdominal position on an operating table 18 as shown in Fig. 6. This can support and fix the patient in a stable condition, even in an operation for a long time.

According to the present invention, a position retainer having a shape fitting on the region of application of the objective patients, can be prepared easily in a short time without special devices or skill. The prepared individual-purpose position retainer has adequate hardness and elasticity, and is high in the dispersibility of body pressure, and even if used for a long time, the user will not feel partial pressing touch and can use it comfortably with good air permeability. Further, this retainer is not deformed if it is transferred or a cover or the like put thereon is removed for laundering or the like.

The individual-purpose position retainer can be widely applied to various articles for retaining the position constantly, for example, automobile seats for racing drivers and the like.

## Claims

1. A stretchable bag (3) made of an inactive water-permeable material, the bag encapsulating a physical position-retaining material (4) comprising a predetermined amount of granules (1) and a predetermined amount of water-curable resin (2) sufficient for bonding the granules after curing of the water-curable resin, the material forming a mass before curing of the water-curable resin so that, when pressure is applied to the mass by a body part (15) of a patient having a preselected shape, the granules (1) move one another to shape the mass into a configuration corresponding to the preselected shape of the part,
**characterised in that**
the granules (1) have an elasticity and the water-curable resin (2) has an elasticity after curing, and the shaped mass of the retaining material (4) has a 25% compressive hardness of at most 1.5 kg/cm² and a compressive residual strain of at most 13% after the water-curable resin (2) has been cured.

2. The bag according to claim 1, wherein the water-curable resin (2) is a water-curable urethane prepolymer.

3. The bag according to claim 1 or 2, wherein the granules (1) and the water-curable resin (2) are inactive to each other before curing.

## Patentansprüche

1. Dehnbare Tasche (3), welche aus einem inaktiven wasserdurchlässigen Material hergestellt ist, wobei die Tasche ein Material (4) zum Halten der physikalischen Position einkapselt, wobei das Material eine vorbestimmte Menge von Granulen (1) und eine vorbestimmte Menge von Wasser abbindendem Harz (2), welche hinreichend zum Binden der Granulen nach dem Abbinden des Wasser abbindenden Harzes ist, wobei das Material vor dem Abbinden des Wasser abbindenden Harzes eine Masse ausbildet, so dass, wenn ein Druck auf die Masse durch einen Körperteil (15) eines Patienten mit einer vorausgewählten Form auf die Masse ausgeübt wird, die Granulen (1) einander bewegen, um die Masse in eine Konfiguration entsprechend der vorausgewählten Form des Teiles zu formen,
**dadurch gekennzeichnet, dass**
die Granulen (1) eine Elastizität aufweisen und das Wasser abbindende Harz (2) nach dem Abbinden eine Elastizität aufweist, und
die geformte Masse des haltenden Materials (4) eine 25 % - Kompressionshärte von höchstens 1,5 kg /cm² und eine Kompressionsrestspannung von höchstens 13 % aufweist, nachdem das Wasser abbindende Harz (2) abgebunden ist.

2. Tasche gemäß Anspruch 1,
wobei das Wasser abbindende Harz (2) ein Wasser abbindendes Urethan-Präpolymer ist.

3. Tasche gemäß Anspruch 1 oder 2,
wobei die Granulen (1) und das Wasser abbindende Harz (2) gegenüber einander vor dem Abbinden inaktiv sind.

## Revendications

1. Sac extensible (3) fait d'un matériau inactif perméable à l'eau, le sac enveloppant un matériau de maintien de la position physique (4) comprenant une quantité prédéterminée de granules (1) et une quantité prédéterminée de résine durcissable à l'eau (2) suffisante pour lier les granules après durcissement de la résine durcissable à l'eau, le matériau :
formant une masse avant durcissement de la résine durcissable à l'eau de telle façon que, lorsqu'une pression est appliquée à la masse par une partie du corps (15) d'un patient présentant une forme présélectionnée, les granules (1) se déplacent l'un l'autre pour façonner la masse dans une configuration correspondant à la forme présélectionnée de la partie,
**caractérisé par le fait que**
les granules (1) ont une élasticité et la résine durcissable à l'eau (2) a une élasticité après durcissement, et
la masse façonnée du matériau de maintien (4) a une dureté à la compression à 25 % d'au plus 1,5 kg/cm² et une déformation résiduelle à la compression d'au plus 13 % après que la résine durcissable à l'eau (2) a été durcie.

2. Le sac selon la revendication 1, dans lequel la résine durcissable à l'eau (2) est un prépolymère d'uréthane durcissable à l'eau.

3. Le sac selon la revendication 1 ou 2, dans lequel les granules (1) et la résine durcissable à l'eau (2) sont inactifs l'un à l'égard de l'autre avant durcissement.
